(19) Europäisches Patentamt
European Patent Office
Office européen des brevets

(11) **EP 2 333 693 B1**

(12) **FASCICULE DE BREVET EUROPEEN**

(45) Date de publication et mention
de la délivrance du brevet:
**10.07.2013 Bulletin 2013/28**

(51) Int Cl.:
***G06K 9/00*** *(2006.01)*

(21) Numéro de dépôt: **10194021.1**

(22) Date de dépôt: **07.12.2010**

(54) **Procédé de correction de la position des yeux dans une image**

Verfahren zur Korrektur der Augenposition in einem Bild

Process for correcting eyes position in an image

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **08.12.2009 FR 0905937**

(43) Date de publication de la demande:
**15.06.2011 Bulletin 2011/24**

(73) Titulaire: **Thales**
**92200 Neuilly Sur Seine (FR)**

(72) Inventeur: **D'Hose, Johan**
**91120, PALAISEAU (FR)**

(74) Mandataire: **Collet, Alain et al**
**Marks & Clerk France**
**Conseils en Propriété Industrielle**
**Immeuble Visium**
**22, Avenue Aristide Briand**
**94117 Arcueil Cedex (FR)**

(56) Documents cités:
**EP-A1- 2 081 152    US-A1- 2006 098 867**

**Description**

L'invention se situe dans le domaine du traitement d'images, en particulier de la biométrie. Elle concerne un procédé de détermination de la position des yeux d'un visage dans une image numérique et un procédé de correction progressive de la position des yeux par itérations d'étapes du premier procédé.

Parmi les traitements d'images consistant à identifier ou authentifier une personne, on distingue ceux basés sur la reconnaissance de tout ou partie de leur visage, comme les traitements de reconnaissance faciale ou de reconnaissance par l'iris. Par identification et authentification, on entend respectivement la détermination et la vérification de l'identité de la personne. Ces traitements comportent habituellement une étape d'acquisition d'une image de la personne, une étape de localisation de son visage et de ses yeux dans l'image acquise, une étape d'extraction d'un modèle représentatif de ses données biométriques à partir des positions de ses yeux, et une étape de comparaison du modèle avec un ou plusieurs autres modèles représentatifs de personnes données. Pour la plupart de ces traitements d'images, les résultats de l'étape d'extraction du modèle représentatif des données biométriques de la personne, notamment en termes de taux d'erreur, dépendent largement de la précision de la détermination des positions des yeux dans l'image. Or les algorithmes de détermination de la position d'un oeil dans une image fournissent généralement des positions approximatives, notamment lorsque l'image est acquise "à la volée", c'est-à-dire sans que la personne détectée coopère.

Un but de l'invention est notamment de pallier tout ou partie des inconvénients précités en fournissant les positions des yeux d'un visage dans une image avec une plus grande précision. A cet effet, l'invention repose sur la comparaison d'une partie d'un visage de référence avec différentes parties du visage pour lequel on recherche la position des yeux, ces différentes parties étant définies relativement à différentes positions possibles des yeux. Plus précisément, l'invention a pour objet un procédé de détermination de la position des yeux d'un visage dans une image numérique comprenant les étapes successives suivantes :

- une étape de détermination d'un couple de positions approximatives des yeux dans l'image numérique,
- une étape de détermination, à partir du couple de positions approximatives, de couples de test de positions des yeux, chaque position d'un oeil dans un couple de test étant dans le voisinage de la position approximative de l'oeil correspondant,
- une étape de transformation géométrique, pour chaque couple de test, de l'image numérique en une image normalisée de manière à faire coïncider les positions des yeux de chaque couple de test avec un couple de positions de référence prédéterminées,
- une étape de comparaison d'au moins une partie de chaque image normalisée couvrant au moins une partie du visage avec une partie correspondante d'une image prédéterminée, chaque comparaison fournissant un score représentatif du taux de ressemblance entre la partie de l'image normalisée et celle de l'image prédéterminée,
- une étape de déclaration des positions des yeux du couple de test associé au meilleur score comme positions effectives des yeux du visage.

L'invention a également pour objet un procédé de correction progressive de la position des yeux d'un visage dans une image numérique à partir d'un couple de positions approximatives et d'un voisinage autour de chaque position approximative. Ce procédé comprend une itération de toutes les étapes précédentes hormis celle de détermination d'un couple de positions approximatives des yeux dans l'image numérique, les positions approximatives prises en compte à chaque itération étant données par la dernière étape de l'itération précédente. Dans ce procédé, la dimension du voisinage est réduite à chaque itération.

Selon une forme particulière de réalisation, le voisinage de la position approximative d'un oeil est déterminé par un cercle de rayon r centré sur ladite position.

Le rayon r peut être une moyenne de distances euclidiennes entre la position réelle d'un oeil dans une image d'une base d'apprentissage et la position approximative de cet oeil déterminée par l'algorithme de traitement d'images utilisé pour l'étape de détermination d'un couple de positions approximatives.

Des couples de test peuvent être déterminés de manière à ce que la position d'au moins un oeil dans chacun de ces couples de test soit située sur le cercle de rayon r centré sur la position approximative de l'oeil correspondant.

Des couples de test peuvent également être déterminés à partir d'une combinaison de positions où chaque position correspond soit à la position approximative de l'oeil considéré, soit à l'une des quatre positions cardinales situées sur le cercle de rayon r centré sur la ladite position approximative, soit à l'une des quatre positions intercardinales situées sur le cercle de rayon r centré sur la ladite position approximative

L'invention a notamment pour avantage qu'elle peut être implémentée dans une chaîne existante de traitement d'images pour la reconnaissance sans nécessiter de modifications substantielles, les algorithmes de traitement utilisés pour le procédé selon l'invention étant déjà couramment utilisés dans une telle chaîne de traitement d'images.

L'invention sera mieux comprise et d'autres avantages apparaîtront à la lecture de la description détaillée d'un mode de réalisation donné à titre d'exemple, description faite en regard de dessins annexés qui représentent :

- la figure 1, un exemple de procédé de détermination de la position des yeux dans une image selon l'invention ;
- la figure 2, un exemple de procédé de correction progressive de la position des yeux dans une image par répétition d'étapes du procédé de la figure 1.

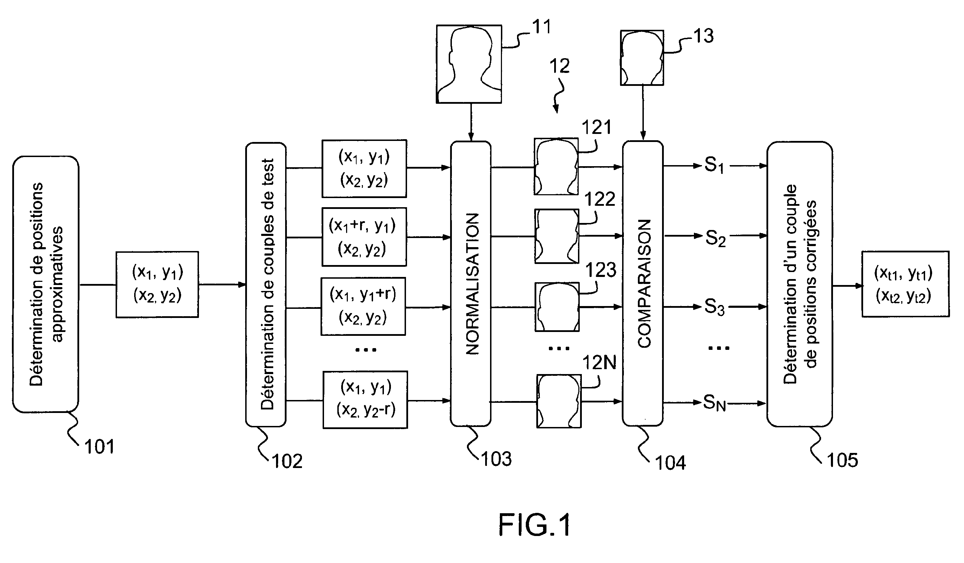

La figure 1 représente schématiquement le procédé de détermination de la position des yeux d'un visage dans une image numérique selon l'invention. Pour la suite de la description, on considère une image numérique 11 sur laquelle est représenté un visage humain ou animal. Un système de coordonnées est associé à l'image numérique afin de repérer des points particuliers de cette image 11, notamment la position des yeux du visage. Le système de coordonnées est par exemple un système de coordonnées cartésiennes dans lequel le couple de coordonnées (x, y) désigne un point d'abscisse x et d'ordonnée y. Le système de coordonnées peut également être basé sur l'indiçage des lignes et des colonnes de pixels dans l'image numérique 11.

Dans une première étape 101, la position approximative des yeux dans l'image numérique 11 est déterminée. La position approximative d'un premier oeil est repérée par le couple $(x_1, y_1)$ et la position approximative d'un second oeil est repérée par le couple $(x_2, y_2)$. Tout algorithme de traitement d'images fournissant la position des yeux dans une image numérique peut être utilisé. Ces algorithmes étant généralement imprécis, le procédé de détermination de la position des yeux selon l'invention comporte des étapes supplémentaires.

Dans une deuxième étape 102, plusieurs positions possibles pour chaque oeil sont déterminées dans le voisinage de la position approximative de l'oeil considéré. Les différentes positions possibles sont appelées positions de test et repérées de façon générique par le couple de coordonnées $(x_t, y_t)$. Pour un même visage, il est donc possible de combiner l'une des positions de test du premier oeil $(x_{t1}, y_{t1})$ avec l'une des positions de test du second oeil $(x_{t2}, Y_{t2})$ de manière à construire différents couples de positions de test. Ces couples sont appelés couples de test. Selon une forme particulière de réalisation, le voisinage d'une position approximative (x, y) peut être déterminé par un cercle de rayon r centré sur cette position. La valeur de ce rayon r sera détaillée plus loin. Une position de test $(x_t, y_t)$ peut alors être située n'importe où dans ce cercle. Pour la suite de la description, on considère à titre d'exemple neuf positions de test pour chaque oeil, à savoir la position d'origine (x, y), les quatre positions cardinales situées sur le cercle, soit N (x, y+r), S (x, y-r), E (x+r, y), O (x-r, y), et les quatre positions intercardinales situées sur le cercle, soit NE $(x+r/\sqrt{2}, y+r/\sqrt{2})$, NO $(x-r/\sqrt{2}, y+r/\sqrt{2})$, SE $(x+r/\sqrt{2}, y-r/\sqrt{2})$, SO $(x-r/\sqrt{2}, y-r/\sqrt{2})$. Dans cet exemple, on dénombre ainsi 81 couples de test. Plus généralement, on considère N couples de test.

Dans une troisième étape 103, l'image numérique originale 11 est normalisée relativement à chaque couple de test, de manière à former autant d'images, dites images normalisées 12, que de couples de test. Les images normalisées 12 sont référencées individuellement 12n, avec n variant de 1 à N. La normalisation de l'image originale 11 relativement à un couple de test consiste essentiellement à effectuer une transformation géométrique de cette image en une image dans laquelle les positions de test du couple de test considéré, notées $(x'_{t1}, y'_{t1})$ et $(x'_{t2}, y'_{t2})$ dans les images normalisées 12, viennent coïncider avec des points de référence prédéterminés, notés $(x_{réf1}, y_{réf1})$ et $(x_{réf2}, y_{réf2})$. Ces points de référence correspondent en fait aux positions auxquelles on souhaite "amener" les yeux du visage pour la suite d'un traitement de reconnaissance. Après normalisation, toutes les positions de test d'un même oeil $(x'_{t1}, y'_{t1})$ ou $(x'_{t2}, y'_{t2})$ ont donc les mêmes coordonnées $(x_{réf1}, y_{réf1})$ ou $(x_{réf2}, y_{réf2})$, respectivement. La normalisation de l'image originale 11 peut également comporter une sous-étape de recadrage dans laquelle seule la partie de l'image normalisée couvrant le visage est conservée. Les limites du cadre sont par exemple déterminées à partir des points de référence $(x_{réf1}, y_{réf1})$ et $(x_{réf2}, y_{réf2})$. Sur la figure 1, les images normalisées 12 sont illustrées après transformation géométrique et recadrage.

Dans une quatrième étape 104, au moins une partie de chaque image normalisée 12 est comparée avec une partie correspondante d'une image prédéterminée 13 comprenant un visage de référence. Le visage de référence est un visage à partir duquel sont déterminés les points de référence $(x_{réf1}, y_{réf1})$ et $(x_{réf2}, y_{réf2})$, ces points correspondant à la position précise des yeux dans l'image prédéterminée. Avantageusement, le visage de référence est un visage dit moyen, c'est-à-dire obtenu en effectuant une moyenne sur un ensemble de visages. Ces visages sont de préférence du même type que le visage pour lequel on cherche à déterminer la position des yeux. Les parties d'images servant à la comparaison sont choisies de manière à couvrir au moins une partie du visage. Elles sont toutes déterminées à partir des points de référence $(x_{réf1}, y_{réf1})$ et $(x_{réf2}, y_{réf2})$. Du fait de la transformation géométrique dans l'étape de normalisation 103, ce ne sont pas exactement les mêmes parties de visage de l'image originale 11 qui sont comparées au visage de référence, mais des parties sensiblement différentes prises relativement à différentes positions de test des yeux. Par ailleurs, les parties d'images servant à la comparaison peuvent éventuellement différer d'une image normalisée à une autre, une partie d'image normalisée étant toujours comparée avec la partie correspondante de l'image prédéterminée 13. Cependant, il est plus avantageux de comparer les mêmes parties d'images pour toutes les images normalisées. Dans le cas où l'étape de normalisation 103 comporte une sous-étape de recadrage, toute la partie de l'image normalisée 12 ainsi conservée peut être comparée à la partie correspondante de l'image prédéterminée 13. La comparaison des parties d'images peut être effectuée par tout algorithme de reconnaissance du visage. Il s'agit par exemple de l'algorithme dit des "eigenfaces". Chaque comparaison d'une partie d'une image normalisée 12n fournit un résultat sous forme d'une valeur numérique, appelé score $S_n$, avec n variant de 1 à N. Les scores $S_n$ sont représentatifs du taux de ressemblance entre la partie de l'image normalisée 12n considérée et la partie correspondante de l'image prédéterminée 13. Ils sont donc représentatifs du taux de ressemblance entre une partie du visage de la personne et une partie du visage de référence. En pratique, ils permettent de déterminer dans quelle mesure ces parties de visage coïncident, et donc dans quelle mesure les positions de test $(x_{t1}, y_{t1})$ et $(x_{t2}, y_{t2})$ d'un couple de test correspondent aux positions effectives des yeux du visage dans l'image originale 11.

Dans une cinquième étape 105, les différents scores $S_n$ sont comparés entre eux et les positions de test $(x_{t1}, y_{t1})$ et $(x_{t2}, y_{t2})$ du couple de test associé au meilleur score $S_n$ sont considérées comme les positions effectives des yeux du visage dans l'image originale 11. Par meilleur score, on entend évidemment le score correspondant au taux de ressemblance le plus élevé entre une partie d'image normalisée 12n et la partie correspondante de l'image prédéterminée 13.

Dans une étape préalable, les différents algorithmes de traitement d'images utilisés dans le procédé selon l'invention peuvent être configurés. En particulier, la valeur du rayon r d'un cercle définissant le voisinage d'une position approximative d'un oeil peut être déterminée à partir de tests réalisés sur une base d'images d'apprentissage, des yeux étant visibles dans ces images. L'algorithme de traitement d'images utilisé pour la première étape 101 du procédé selon l'invention est également utilisé avec les images de la base d'apprentissage pour fournir des positions approximatives des yeux, notées $(x_i, y_i)$, où l'indice i permet de référencer les différents yeux. Par ailleurs, les positions réelles de ces yeux sont repérées et notées $(x_{ir}, y_{ir})$, avec le même indice i. Les positions réelles sont par exemple repérées manuellement par un utilisateur. L'incertitude sur la position d'un oeil référencé i peut être représentée par la distance euclidienne $e_i$ entre la position de l'oeil $(x_i, y_i)$ fournie par l'algorithme et la position réelle de cet oeil $(x_{ir}, y_{ir})$. Cette distance est donnée par la relation suivante :

$$e_i = \sqrt{\left(x_i - x_{ir}\right)^2 + \left(y_i - y_{ir}\right)^2} \tag{1}$$

Le rayon r peut alors être déterminé comme étant une moyenne des distances euclidiennes $e_i$.

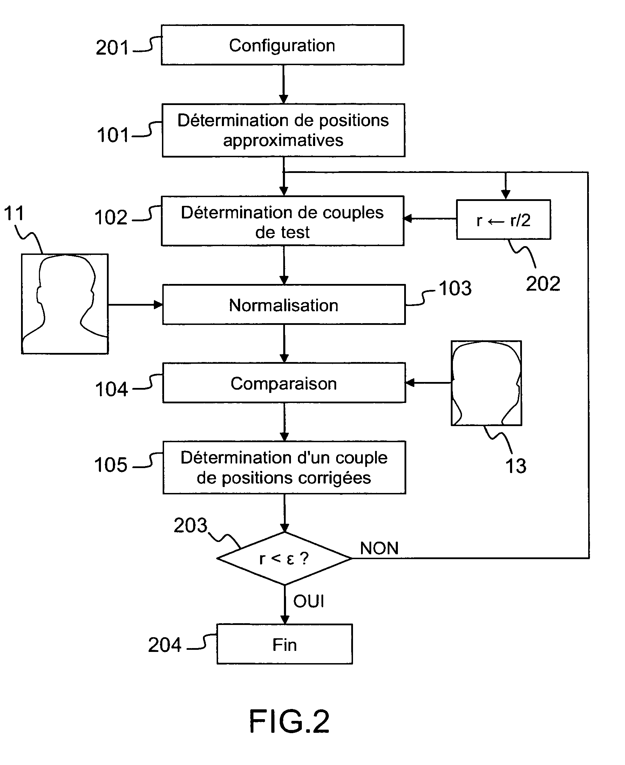

La figure 2 illustre un exemple de procédé de correction de la position des yeux dans une image réalisé à partir du procédé décrit ci-dessus. Selon ce procédé de correction, les étapes 102 à 105 sont répétées en boucle en considérant, à chaque nouvelle itération de la boucle, des voisinages de plus en plus petits autour des positions effectives déterminées lors de l'itération précédente de la boucle. Les positions effectives sont ainsi corrigées progressivement à chaque itération de la boucle. Dans une première étape 201, les différents algorithmes de traitement d'images utilisés dans le procédé selon l'invention sont configurés. En particulier, le rayon r du cercle permettant de définir le voisinage de positions peut être déterminé. Les étapes 101 à 105 telles que décrites en référence à la figure 1 peuvent ensuite être exécutées, l'exécution des étapes 102 à 105 formant une première itération de la boucle. A l'issue de l'étape 105, un couple de positions effectives est déterminé. Ce couple de positions est alors réinjecté comme couple de positions approximatives pour l'étape 102 de détermination de couples de test. Les couples de test sont déterminés dans un voisinage plus restreint que lors de l'itération précédente de la boucle. Le rayon r est par exemple divisé par deux dans une étape 202, comme représenté sur la figure 2. Les étapes 103 à 105 sont ensuite exécutées successivement, l'exécution des étapes 102 à 105 formant une deuxième itération de la boucle. Les étapes 102 à 105 peuvent ainsi être répétées suivant des itérations successives de la boucle jusqu'à obtenir une précision de positions effectives des yeux jugée satisfaisante. Cette précision est par exemple atteinte lorsque le rayon r du cercle devient inférieur à un seuil ε prédéterminé. Une étape 203 est insérée à cet effet à l'issue de l'étape 105 de manière à déclencher ou non une nouvelle itération de la boucle. Lorsque la précision des positions effectives est jugée satisfaisante, il est mis fin au procédé dans une étape 204.

**Revendications**

**1.** Procédé de détermination de la position des yeux d'un visage dans une image numérique, **caractérisé en ce qu'**il comprend les étapes successives suivantes :

- une étape (101) de détermination d'un couple de positions approximatives des yeux $((x_1, y_1), (x_2, y_2))$ dans l'image numérique (11),
- une étape (102) de détermination, à partir du couple de positions approximatives $((x_1, y_1), (x_2, y_2))$, de couples de test de positions des yeux $((x_{t1}, y_{t1}), (x_{t2}, y_{t2}))$, chaque position d'un oeil dans un couple de test étant dans le voisinage de la position approximative de l'oeil correspondant,
- une étape (103) de transformation géométrique, pour chaque couple de test, de l'image numérique (11) en une image normalisée (12n) de manière à faire coïncider les positions des yeux de chaque couple de test $((x'_{t1},$

y'$_{t1}$), (x'$_{t2}$, y'$_{t2}$)) avec un couple de positions de référence prédéterminées ((x$_{réf1}$, y$_{réf1}$), (x$_{réf2}$, y$_{réf2}$)),

- une étape (104) de comparaison d'au moins une partie de chaque image normalisée (12n) couvrant au moins une partie du visage avec une partie correspondante d'une image prédéterminée (13), chaque comparaison fournissant un score (S$_n$) représentatif du taux de ressemblance entre la partie de l'image normalisée (12n) et celle de l'image prédéterminée (13),

- une étape (105) de déclaration des positions des yeux ((x$_{t1}$, y$_{t1}$), (x$_{t2}$, y$_{t2}$)) du couple de test associé au meilleur score (S$_n$) comme positions effectives des yeux du visage.

**2.** Procédé selon la revendication 1, dans lequel le voisinage de la position approximative d'un oeil ((x$_1$, y$_1$), (x$_2$, y$_2$)) est déterminé par un cercle de rayon r centré sur ladite position.

**3.** Procédé selon la revendication 2, dans lequel le rayon r est une moyenne de distances euclidiennes (e$_i$) entre la position réelle ((x$_{ir}$, y$_{ir}$)) d'un oeil dans une image d'une base d'apprentissage et la position approximative ((x$_i$), y$_i$)) de cet oeil déterminée par l'algorithme de traitement d'images utilisé pour la première étape (101) du procédé.

**4.** Procédé selon l'une des revendications 2 et 3, dans lequel des couples de test sont déterminés de manière à ce que la position d'au moins un oeil ((x$_{t1}$, y$_{t1}$), (x$_{t2}$, y$_{t2}$)) dans chacun de ces couples de test soit située sur le cercle de rayon r centré sur la position approximative ((x$_1$, y$_1$), (x$_2$, y$_2$)) de l'oeil correspondant.

**5.** Procédé selon l'une des revendications 2 à 4, dans lequel des couples de test sont déterminés à partir d'une combinaison de positions où chaque position correspond soit à la position approximative ((x$_1$, y$_1$), (x$_2$, y$_2$)) de l'oeil considéré, soit à l'une des quatre positions cardinales ((x, y+r), (x, y-r), (x+r, y), (x-r, y)) situées sur le cercle de rayon r centré sur la ladite position approximative ((x$_1$, y$_1$), (x$_2$, y$_2$)), soit à l'une des quatre positions intercardinales (x+r/√2, y+r/√2), (x-r/√2, y+rl,a), (x+r/√2, y-r/√2), (x-r/√2, y-r/√2) situées sur le cercle de rayon r centré sur la ladite position approximative ((x$_1$, y$_1$), (x$_2$, y$_2$)).

**6.** Procédé selon l'une des revendications précédentes, dans lequel l'étape (102) de détermination de couples de test, l'étape (103) de transformation géométrique, l'étape (104) de comparaison et l'étape (105) de déclaration des positions des yeux sont réitérées, la dimension du voisinage étant réduite à chaque itération, les positions effectives des yeux du visage d'une itération donnée étant utilisées comme positions approximatives ((x$_1$, y$_1$), (x$_2$, y$_2$)) pour l'itération suivante.

**Patentansprüche**

**1.** Verfahren zum Ermitteln der Position der Augen eines Gesichts in einem digitalen Bild, **dadurch gekennzeichnet, dass** es die folgenden aufeinander folgenden Schritte beinhaltet:

- einen Schritt (101) des Ermittelns eines Paares von ungefähren Positionen der Augen ((x$_1$, y$_1$), (x$_2$, y$_2$)) in dem digitalen Bild (11),
- einen Schritt (102) des Ermittelns, auf der Basis des Paares von ungefähren Positionen ((x$_1$, y$_1$), (x$_2$, y$_2$)), von Paaren von Testpositionen der Augen ((x$_{t1}$, y$_{t1}$), (x$_{t2}$, y$_{t2}$)), wobei jede Position eines Auges in einem Testpaar in der Nähe der ungefähren Position des entsprechenden Auges liegt,
- einen Schritt (103) des geometrischen Transformierens, für jedes Testpaar, des digitalen Bildes (11) zu einem normalisierten Bild (12n), um zu bewirken, dass die Positionen der Augen jedes Testpaares ((x'$_{t1}$, y'$_{t1}$), (x'$_{t2}$, y'$_{t2}$)) mit einem Paar von vorbestimmten Referenzpositionen ((x$_{ref1}$, y$_{ref1}$), (x$_{ref2}$, y$_{ref2}$)) übereinstimmen,
- einen Schritt (104) des Vergleichens von wenigstens einem Teil jedes normalisierten Bildes (12n), das wenigstens einen Teil des Gesichts bedeckt, mit einem entsprechenden Teil eines vorbestimmten Bildes (13), wobei jeder Vergleich eine Bewertung (S$_n$) ergibt, die das Ähnlichkeitsniveau zwischen dem Teil des normalisierten Bildes (12n) und dem des vorbestimmten Teils (13) repräsentiert,
- einen Schritt (105) des Erklärens der Positionen der Augen ((x$_{t1}$, y$_{t1}$), (x$_{t2}$, y$_{t2}$)) des mit der besten Bewertung (S$_n$) assoziierten Testpaares als effektive Positionen der Augen des Gesichts.

**2.** Verfahren nach Anspruch 1, bei dem die Nähe der ungefähren Position eines Auges ((x$_1$, y$_1$), (x$_2$, y$_2$)) durch einen auf dieser Position zentrierten Kreis mit Radius r bestimmt wird.

**3.** Verfahren nach Anspruch 2, bei dem der Radius r ein Mittel der euklidischen Distanzen (e$_i$) zwischen der Ist-Position ((x$_{ir}$, y$_{ir}$)) eines Auges in einem Bild einer Lerndatenbank und der ungefähren Position ((x$_i$, y$_i$)) dieses Auges ist, die durch den für den ersten Schritt (101) des Verfahrens benutzten Bildverarbeitungsalgorithmus ermittelt wird.

4. Verfahren nach einem Anspruch 2 oder 3, wobei Testpaare ermittelt werden, so dass sich die Position von wenigstens einem Auge $((x_{t1}, y_{t1}), (x_{t2}, y_{t2}))$ jedes der Testpaare auf dem Kreis mit Radius r befindet, der auf der ungefähren Position $((x_1, y_1), (x_2, y_2))$ des entsprechenden Auges zentriert ist.

5. Verfahren nach einem der Ansprüche 2 bis 4, wobei Testpaare auf der Basis einer Kombination von Positionen bestimmt werden, wobei jede Position entweder der ungefähren Position $((x_1, y_1), (x_2, y_2))$ des betrachteten Auges oder einer der vier Kardinalpositionen $((x, y+r), (x, y-r), (x+r, y), (x-r, y))$ entspricht, die sich auf dem Kreis mit Radius r befindet, der auf der ungefähren Position $((x_1, y_1), (x_2, y_2))$ zentriert ist, oder einer der vier Interkardinalpositionen $(x+r/\sqrt{2}, y+r/\sqrt{2}), (x-r/\sqrt{2}, y+r/\sqrt{2}), (x+r/\sqrt{2}, y-r/\sqrt{2}), (x-r/\sqrt{2}, y-r/\sqrt{2})$, die sich auf dem Kreis mit Radius r befinden, der auf der ungefähren Position $((x_1, y_1), (x_2, y_2))$ zentriert ist.

6. Verfahren nach einem der vorherigen Ansprüche, wobei der Schritt (102) des Ermittelns von Testpaaren, der Schritt (103) des geometrischen Transformierens, der Schritt (104) des Vergleichens und der Schritt (105) des Erklärens der Positionen der Augen wiederholt werden, wobei das Maß für die Nähe bei jeder Wiederholung reduziert wird, wobei die effektiven Positionen der Augen des Gesichts einer gegebenen Wiederholung als ungefähre Positionen $((x_1, y_1), (x_2, y_2))$ für die nächste Wiederholung verwendet werden.

**Claims**

1. A method for determining the position of the eyes of a face in a digital image, **characterised in that** it comprises the following successive steps:

   - a step (101) of determining a pair of approximate positions of the eyes $((x_1, y_1), (x_2, y_2))$ in said digital image (11),
   - a step (102) of determining, on the basis of the pair of approximate positions $((x_1, y_1), (x_2, y_2))$, test pairs of positions of the eyes $((x_{t1}, y_{t1}), (x_{t2}, y_{t2}))$, each position of an eye in a test pair being in the vicinity of the approximate position of the corresponding eye,
   - a step (103) of geometrically transforming, for each test pair, said digital image (11) into a normalised image (12n) so as to make the positions of the eyes of each test pair $((x'_{t1}, y'_{t1}), (x'_{t2}, y'_{t2}))$ coincide with a pair of predetermined reference positions $((x_{ref1}, y_{ref1}), (x_{ref2}, y_{ref2}))$,
   - a step (104) of comparing at least part of each normalised image (12n) covering at least part of the face with a corresponding part of a predetermined image (13), each comparison providing a score $(S_n)$ that represents the level of resemblance between the part of said normalised image (12n) and the part of said predetermined image (13),
   - a step (105) of declaring the positions of the eyes $((x_{t1}, y_{t1}), (x_{t2}, y_{t2}))$ of the test pair that is associated with the best score $(S_n)$ as effective positions of the eyes of the face.

2. The method according to claim 1, wherein the vicinity of the approximate position of an eye $((x_1, y_1), (x_2, y_2))$ is determined by a circle of radius r that is centred on said position.

3. The method according to claim 2, wherein said radius r is an average of the Euclidian distances $(e_i)$ between the actual position $((x_{ir}, y_{ir}))$ of an eye in an image of a learning database and the approximate position $((x_i, y_i))$ of said eye as determined by the image processing algorithm that is used for said first step (101) of said method.

4. The method according to claim 2 or 3, wherein test pairs are determined so that the position of at least one eye $((x_{t1}, y_{t1}), (x_{t2}, y_{t2}))$ in each of said test pairs is located on the circle of radius r that is centred on said approximate position $((x_1, y_1), (x_2, y_2))$ of the corresponding eye.

5. The method according to any one of claims 2 to 4, wherein test pairs are determined on the basis of a combination of positions where each position corresponds either to said approximate position $((x_1, y_1), (x_2, y_2))$ of the considered eye or to one of the four cardinal positions $((x, y+r), (x, y-r), (x+r, y), (x-r, y))$ that are located on the circle of radius r that is centred on said approximate position $((x_1, y_1), (x_2, y_2))$ or to one of the four inter-cardinal positions $(x+r/\sqrt{2}, y+r/\sqrt{2}), (x-r/\sqrt{2}, y+r/\sqrt{2}), (x+r/\sqrt{2}, y-r/\sqrt{2}), (x-r/\sqrt{2}, y-r/\sqrt{2})$ that are located on the circle of radius r that is centred on said approximate position $((x_1, y_1), (x_2, y_2))$.

6. The method according to any one of the preceding claims, wherein the step (102) of determining test pairs, the step (103) of geometrically transforming, the step (104) of comparing and the step (105) of declaring the positions of the eyes are repeated, the dimension of the vicinity being reduced during each repetition, the effective positions of the eyes of the face of a given repetition being used as approximate positions $((x_1, y_1), (x_2, y_2))$ for the next repetition.

**FIG.1**

101 — Détermination de positions approximatives

$(x_1, y_1)$
$(x_2, y_2)$

102 — Détermination de couples de test

$(x_1, y_1)$
$(x_2, y_2-r)$
$\cdots$
$(x_1, y_1+r)$
$(x_2, y_2)$
$(x_1+r, y_1)$
$(x_2, y_2)$
$(x_1, y_1)$
$(x_2, y_2)$

103 — NORMALISATION

11

12

12N
123
122
121

104 — COMPARAISON

13

$S_N$ $\cdots$ $S_3$ $S_2$ $S_1$

105 — Détermination d'un couple de positions corrigées

$(x_{t1}, y_{t1})$
$(x_{t2}, y_{t2})$

201 ⎬ Configuration

101 ⎬ Détermination de positions approximatives

102 ⎬ Détermination de couples de test ← r ← r/2
⌐ 202

11

103 ⎬ Normalisation

104 ⎬ Comparaison ← 13

105 ⎬ Détermination d'un couple de positions corrigées

203 ⟨ r < ε ? ⟩ —— NON

OUI

204 ⎬ Fin

FIG.2